# EUROPÄISCHE PATENTSCHRIFT

(11) **EP 1 197 621 B1**
(45) Veröffentlichungstag und Bekanntmachung des Hinweises auf die Patenterteilung: **14.01.2004**
(21) Anmeldenummer: 01124192.4
(22) Anmeldetag: 11.10.2001
(51) Int. Cl.: E05C 3/24

(54) **Verriegelungsanordnung für ein Gepäckfach**
Locking arrangement for storage bin
Dispositif de verrouillage pour coffre de rangement

(30) Priorität: 14.10.2000 DE 20017674 U
(43) Veröffentlichungstag der Anmeldung: 17.04.2002
(73) Patentinhaber: Schwarz Verbindungs-Systeme GmbH, 75382 Althengstett (DE)
(72) Erfinder: Schwarz, Helmut, 71263 Weil der Stadt (DE)
(74) Vertreter: Blutke, Klaus Wilhelm, Dipl.-Ing.

(56) Entgegenhaltungen:
- DE-U- 29 808 914
- GB-A- 246 079
- US-A- 2 311 688
- US-A- 5 630 630

## Beschreibung

Die Erfindung betrifft eine lösbare mechanische Verriegelungsanordnung zwischen einem schwenkbaren Deckel und einem Behälter, vorzugsweise einem Gepäckfach.

Nach dem Stand der Technik sind eine Vielzahl solcher Verbindungsanordnungen bekannt:
Türschloßähnliche mit Schlüssel zu betätigende Anordnungen, Schnappverschlüsse, Klappverschlüsse, etc.
In der Europäischen Patentschrift (Anmeldenummer 93309559.8; Veröffentlichungsnummer 0634549 A1) ist eine selbstschließende Verriegelung beschrieben, welche einen in einem Gehäuse (Rahmen) schwenkbaren Handgriff aufweist. Der Handgriff kann zwei Positionen einnehmen: eine unverriegelte und eine Rastposition. Diese Verriegelung umfaßt u.a. einen durch den Handgriff betätigbaren um eine erste Achse schwenkbaren Nockenhebel, ein Riegel-Gleitstück, welches entlang einer 2. Achse ( senkrecht zur 1. Achse) verschiebbar ist und ein entlang einer 3. Achse (senkrecht zur 2. Achse) bewegbares Schloßteil sowie eine Reihe anderer Teile, die im Zusammenwirken die beiden Positionen des Handgriffes bedingen.

Eine solche Konstruktion wird jedoch nicht den Anforderungen gerecht, die insbesondere an Verriegelungsanordnungen für bestimmte Anwendungsgebiete gestellt werden.

So sind z.B. an die Klappdeckel-Verschlüsse von Gepäckfächern in Flugzeugen besondere Anforderungen gestellt. Sie dürfen sich aus Sicherheitsgründen, auch nicht in Extremfällen (z.B. beim Auftreten von Turbulenzen und den damit verbundenen Belastungen durch umherwirbelnde Gepäckstücke) öffnen.

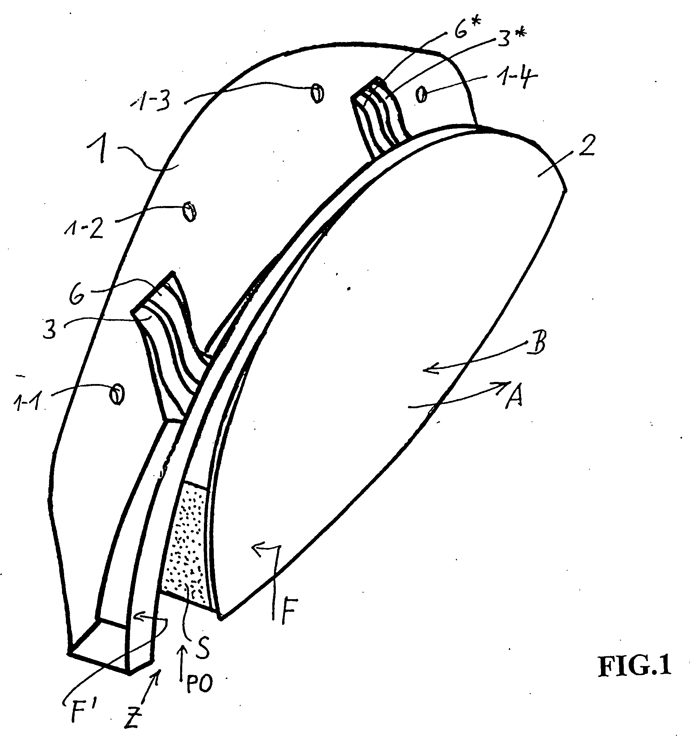

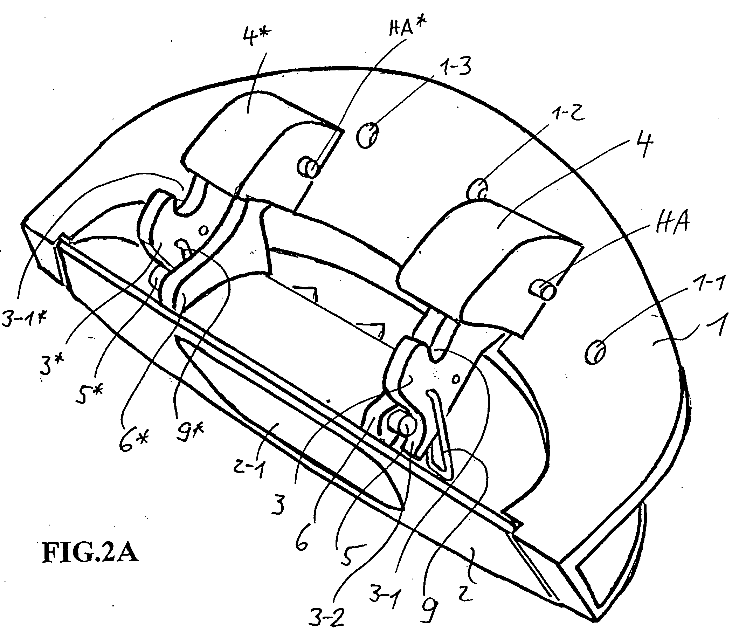

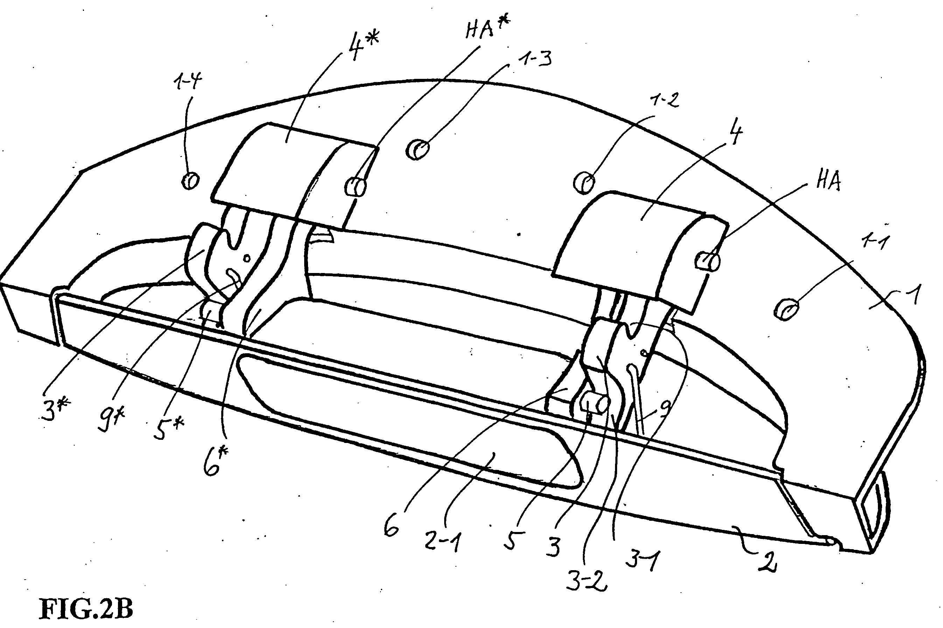

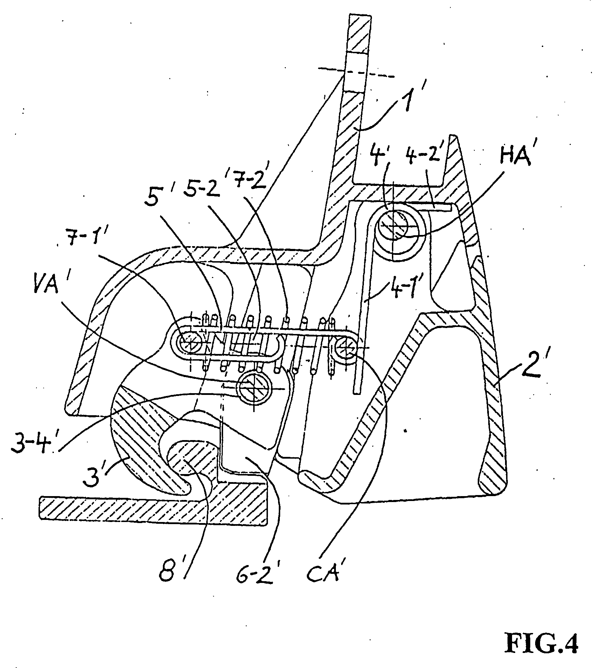

Eine solche Verriegelungsanordnung für einen schwenkbaren Gepäckfach-Deckel ist z.B. im Deutschen Gebrauchsmuster 29 808 914.9 beschrieben (s. FIG.4):
Sie umfaßt ein mit einem Deckel verbundenes Rahmenteil 1' und einen in diesem Rahmenteil 1' angeordneten schwenkbaren Handgriff 2'. Eine mit dem Gepäckfach verbundene Verriegelungshaken-Verschlußnase 8' ist von einem Verriegelungshaken 3' verriegelnd umfaßbar.
Der Handgriff 2' ist um eine im Rahmenteil 1' angeordnete Handgriff-Schwenk-Achse HA' schwenkbar. Der Verriegelungshaken 3' ist um eine im Rahmenteil 1' angeordnete Verriegelungshaken-Schwenk-Achse VA' schwenkbar angeordnet, welche parallel zur Handgriff-Schwenk-Achse HA' verläuft. Zwischen Handgriff 2' und Verriegelungshaken 3' ist ein Verbindungsglied 5' angeordnet, dessen handgriff(2')nahes Ende mit einer im Handgriff 2' angeordneten ersten Verbindungsglied-Schwenkachse CA' verbunden ist und dessen handgriff(2')fernes Ende mit einer langlochähnlichen Aussparung 5-2' versehen ist, durch die eine parallel zur ersten Verbindungsglied-Schwenk-Achse CA' verlaufende zweite Verbindungsglied-Schwenk-Achse 7-1' des Verriegelungs.Hakens 3' verläuft.
Auf dem Verbindungsglied 5' ist eine zwischen erster CA' und zweiter 7-1' Verbindungsglied-Schwenk-Achse 7-1' wirkende Druckfeder angeordnet.
Der Handgriff 2' ist durch eine zwischen diesem und dem Rahmenteil 1' angeordnete Feder 4' in das Rahmenteil 1' einschwenkbar.
Bei völlig geöffneter oder völlig geschlossener Verriegelung ist die zweite Verbindungsglied -Schwenkachse 7-1' in der handgriff(2')fernen Position der Aussparung 5-2' angeordnet, wobei die Kraft der Feder 4' die der Druckfeder 7-2' übersteigt und der Handgriff 2' in das Rahmenteil eingeschwenkt ist.
Bei nicht vollends geschlossener Verriegelung im Falle eines verriegelungsverhindernden Aufsitzens des Verriegelungshakens 3' auf der Verriegelungshaken-Verschlußnase 8' oder im Falle eines unerwünscht auf der Verriegelungshaken-Verschlußnase 8' befindlichen Gegenstandes (z.B. eines Kleidungsstückes) ist der Handgriff 2' derart durch die Druckfeder 7-2' gegen die Kraft der Feder 4' aus dem Rahmenteil 1' geschwenkt, daß er aus der Außenflächenebene des Rahmenteils 1' teilweise herausragt. Diese Konstruktion (es sind z.B. 2 Achsen erforderlich) läßt eine kompaktere Bauweise vermissen. Desweiteren ist bei dieser bekannten Verriegelungsanordnung abmessungsbedingt keine Möglichkeit einer "Doppel-Verriegelung" gegeben.
In der US-Patentschrift 2 311 688 (nachfolgende Figuren-Bezugsnummern beziehen sich auf diese Schrift) ist eine Verriegelungsanordnung für eine Tür beschrieben, welche ein Rahmenteil (10) und einen in diesem Rahmenteil (10) angeordneten schwenkbaren Handgriff (19) umfaßt. Diese Verriegelungsschaltung weist mindestens einen am Rahmenteil (10) angeordneten Verriegelungshaken (30) sowie ein mit dem Türrahmen verbindbares Verschlußteil (F) auf, welches von dem Verriegelungshaken (30) verriegelnd umfaßbar ist. Diese Anordnung hat folgende Merkmale :
Der Handgriff (19) weist mindestens einen Schwenkarm (24,25) auf, mit dem er um eine im Rahmenteil (22) angeordnete Handgriff-Schwenk-Achse (23) schwenkbar ist, wobei der Verriegelungshaken (30) ebenfalls um diese Handgriff-Schwenk-Achse (23) schwenkbar ist.
Der Schwenkarm (24,25) ist durch eine Schwenkarm-Feder (35 oder 35 a) vorgespannt zur Erreichung der geschlossenen Position des Handgriffes (19).
Der Schwenkarm (24,25) weist einen Mitnehmer auf, durch welchen bei Öffnung des Handgriffes (19) zur Lösung der Verriegelung der Verriegelungshaken mitnehmbar ist.
Den Darstellungen in FIG. 1 und FIG. 2 dieser US-Patentschrift kann entnommen werden, daß der Verriegelungshaken (30) im unverriegelten Zustand in Öffnungsrichtung des Handgriffes (19) geschwenkt werden kann, bis er (30) an der Innenseite des Handgriffes (19) anschlägt; bei weiterer Schwenkung des Verriegelungshakens (30) kann der Handgriff (19) aus der geschlossenen in die geöffnete Position bewegt werden.

Es ist Aufgabe der Erfindung, eine Verriegelungsanordnung für ein Gehäuse mit Klappdeckel, vorzugsweise für Gepäckboxen in Flugzeugen mit einer kompakteren Bauweise vorzusehen.
Darüberhinaus soll auch eine Doppel-Verriegelung möglich sein. Dabei muß eine sichere Verriegelung, die auch Extrembelastungen (in allen Lastsituationen und auch bei

Verschiebung von Klappdeckel und Gepäckboxboden) gerecht wird, gewährleistet sein.
Ein beinahe aber noch nicht ganz geschlossener Handgriff muß leicht erkennbar sein, um eine nicht vollzogene Verriegelung zu bemerken (diese Situation wird folgend durch die Formulierung "nicht ganz geschlossene Position" gekennzeichnet).
Außerdem soll die Verriegelungsanordnung- auch ohne Betätigung ihrer Schloßteile- durch einfaches Zudrücken des Klappdeckels funktionieren.

Diese Aufgaben der Erfindung werden durch die im kennzeichnenden Teil des Anspruches 1 genannten Merkmale gelöst.

Vorteilhafte Weiterbildungen der Erfindung sind in den Unteransprüchen gekannzeichnet.

Ein Ausführungsbeispiel der Erfindung ist in den Zeichnungen dergestellt und wird im folgenden näher beschrieben. Es zeigen:
FIG.1
   eine schematische perspektivische Darstellung des Rahmenteiles und des Handgriffes in nicht ganz geschlossener Position;
FIG.2 A und FIG. 2B
   schematische perspektivische Darstellungen der Rückseite des Rahmenteiles und des Handgriffes mit Blick auf die Verschlußhaken;
FIG.3
   eine auszugsweise schematische perspektivische Darstellung der Rückseite des Rahmenteiles und des Handgriffes mit Blick auf einen Verschlußhaken,
FIG.4
   eine technische Schnittzeichnung einer Verriegelungsanordnung nach den Stand der Technik.
FIG.5A, 5B, 5C
   eine Kombinationsfeder in verschiedenen Ansichten.

FIG.1 zeigt
eine schematische perspektivische Darstellung des Rahmenteiles 1 und des Handgriffes 2 in nicht ganz geschlossener Position PO.
Die Formulierung "nicht ganz geschlossene Position" PO bedeutet, daß die Frontfläche F des Handgriffes 2 aus der durchgehend gedachten Frontfläche F' des Rahmenteils 1 heraussteht (in einem solchen Fall schneidet die Frontfläche F des Handgriffes 2 die durchgehend gedachte Frontfläche F' des Rahmenteils 1). In einer solchen Position ( eines beinahe aber noch nicht ganz geschlossenen Klappdeckels) ist eine Verriegelung noch nicht erfolgt. Eine solche Position muß aus Sichheitsgründen leicht erkennbar sein.

In einer "geschlossenen Position" (bei geschlossenem Handgriff (2)) liegt die gedachte Frontfläche F des Handgriffes 2 in der durchgehend gedachten Frontfläche F' des Rahmenteils (1).

Der Handgriff 2 kann manuell durch Eingreifen in eine Griffmulde 2-1 ( FIG.2A, FIG. 2B) in Richtung A aus dem Rahmenteil 1 herausgeschwenkt werden. Die Schwenkung erfolgt über zwei mit dem Handgriff verbundene Hebelarme 6 und 6*.

Diese Hebelarme sitzen auf einer Handgriff-Schwenkachse HA bzw. HA*, welche mit dem Rahmenteils 1 (s. FIG. 2A und 2B) verbunden ist.
Der Handgriff 2 kann durch Drücken auf seine Frontfläche F in Richtung B geschlossen werden. Bis auf einen Ausnahmefall ( auf den an späterer Stelle noch eingegangen wird) wird dabei auch die Verriegelungsanordnung verriegelt. "

In geschlossenener Position des Handgriffes 2 (FIG. 1 zeigt abweichend davon die nicht ganz geschlossene Position PO) liegt die Frontfläche F des Handgriffes 2 in der gedachten Frontfläche F' des Rahmenteils, d.h. die Rahmenflächen F und F' "fluchten" miteinander.
Für die nicht ganz geschlossenen Position PO des Handgriffes - wie in FIG. 2A und FIG. 2B dargestellt- liegen die Frontflächen F und F' schräg zueinander: bei einem seitlichen Blick in Richtung Z ist die seitliche Fläche S des Handgriffes 2 erkennbar (zur Hervorhebung kann sie rot markiert sein); sie signalisiert dem Betrachter sofort die nicht ganz geschlossene Position PO des Handgriffes 2 . Eine solche nicht ganz geschlossene Position bedeutet , daß die Verriegelungsanordnung nicht verriegelt ist.

Die Öffnungen 1-1, 1-2, 1-3 und 1-4 im Rahmenteil 1 dienen der Befestigung desselben in einem Rahmen, z.B. in der Klappe eines Gepäckfaches im Flugzeug.

Neben jedem Schwenkarm 6 und 6* ist ein Verriegelungshaken 3 und 3* angeordnet. Diese Verriegelungshaken 3 und 3* sind wie die Schwenkarme 6 und 6* auf den Handgriff-Schwenkachsen HA bzw. HA* schwenkbar angeordnet.

Bei Verriegelung der Verriegelungsanordnung umfassen die Verriegelungshaken jeweils ein im Innern des Behälters (nicht dargestellt) randwärts angeordnetes Verriegelungs-Verschlußteil (analog zu der in FIG. 4 gezeigten Verriegelungs-Verschlußnase; ebensogut kann z.B. auch eine Welle als Verriegelungs-Verschlußteil vorgesehen sein).

Details des Verriegelungsmechanismus werden nachfolgend im Zusammenhang mit den FIG. 2A und 2B beschrieben.

Der Handgriff 2 ist durch mindestens eine zwischen diesem und dem Rahmenteil 1 angeordnete Schwenkarm-Feder (nicht dargestellt) in das Rahmenteil einschwenkbar.
Eine solche Schwenkarm-Feder ist vorzugsweise als Torsions-Spiralfeder ausgeführt und auf der Handgriff-Achse HA angeordnet, wobei sich Ihre Enden am Schwenkarm 6 des Handgriffes und am Rahmenteil 1 abstützen.

FIG.2 A und FIG. 2B zeigen
schematische perspektivische Darstellungen der Rückseite des Rahmenteiles 1 und des Handgriffes 2 mit Blick auf die Verriegelungshaken 3 und 3* und die Schwenkarme 6 und 6* des Handgriffes 2.

Verriegelungshaken 3 und Schwenkarm 6 sitzen auf der ihnen gemeinsamen Handgriff-Schwenkachse HA; Verschlußhaken 3* und Schwenkarm 6* sitzen auf der ihnen gemeinsamen Handgriff-Schwenkachse HA*.
Die Handgriff-Schwenk-Achsen HA und HA* liegen in einer Fluchtlinie. Diese Schwenk-Achsen sind in Seitenwandungen der Hohl-Nischen 4 und 4* des Rahmenteils 1 fixiert. Diese Hohl-Nischen sind nach unten hin für den Austritt der Schwenkarme und Verriegelungshaken offen.

Die Verriegelungshaken 3 und 3* weisen jeweils eine Hakengrube 3-1, 3-1* auf. In Verriegelungsposition sitzen in den Hakengruben die nicht dargestellten Verriegelungshaken-Verschlußteile (z.B. nasen- oder stabförmige Gebilde). Sie werden dabei von den Verriegelungshaken verriegelnd umfaßt.

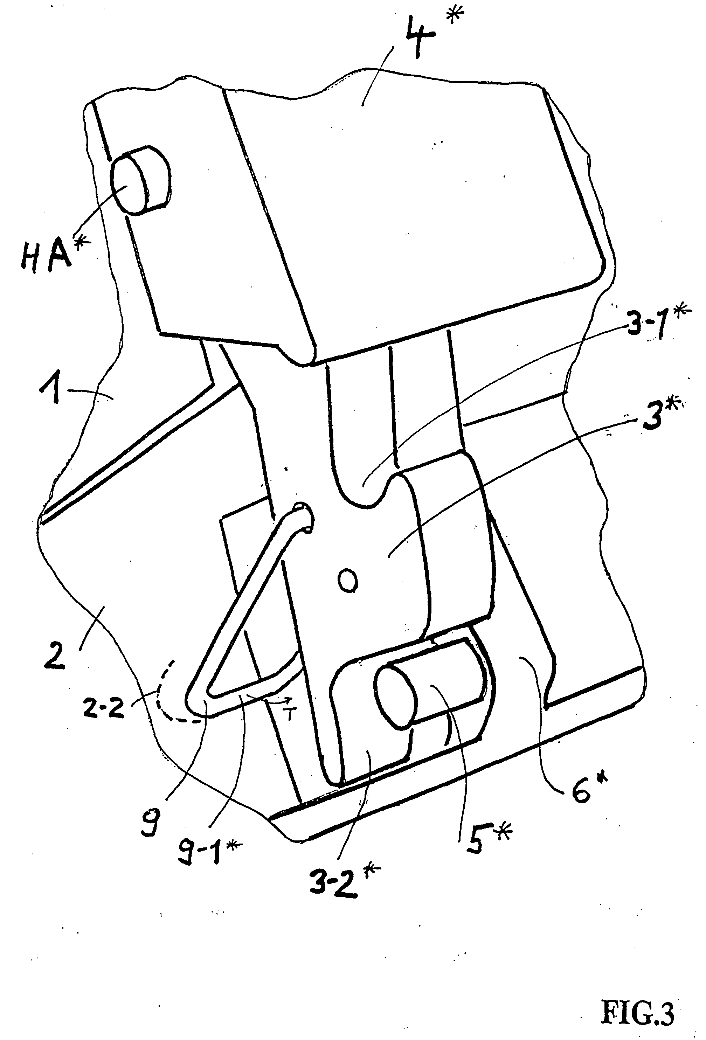

Der Verriegelungshaken weist an seinem Kopfende einen Vorsprung 3-2 auf, welcher bei Bewegung des Verriegelungshakens 3 in Richtung Y auf den am Handgriff 2 angeordneten Mitnehmer 5 anschlägt und die Bewegung abstoppt. Ebenso kann die Bewegung auch durch einen anderen Anschlag (z.B. an der Hohl-Nische) abgestoppt werden.
Der Mitnehmer 5 dient insbesondere dazu, daß bei der Öffnung der Verriegelungsanordnung (Handgriff wird in Richtung A gezogen /geschwenkt) der Verriegelungshaken durch den Mitnehmer 5 vom Verriegelungshaken-Verschlußteil (nicht dargestellt) abgezogen wird.
An jedem Verriegelungshaken 3 und 3* ist eine Feder 9 und 9* befestigt, welche dazu dient, den Handgriff "abzufedern", wenn Verriegelungshaken und Handgriff aufeinander zu bewegt werden. Ohne eine solche Abfederung würde ein entsprechend ausgebildeter Verriegelungshaken oder ein mit ihm verbundenes Element an der Innenseite (2-2) des Handgriffes (2) anschlagen und bei weiterer Schwenkung des Verriegelungshakens den Handgriff (2) aus der geschlossenen in die geöffnete Position (PO) bewegen.
Der Verriegelungshaken 3* ist bei geschlossenem Handgriff 2 im unverriegelten Zustand in Öffnungsrichtung A des Handgriffes schwenkbar, bis die mit ihm verbundene Feder 9* an der Innenseite 2-2 des Handgriffes 2 anschlägt (FIG.3). Bei weiterer Schwenkung des Verriegelungshakens 3 wird der Handgriff 2 durch die auf ihn wirkende Feder 9* aus seiner geschlossenen Position gegen zunehmende Feder(9*)kraft in die geöffnete Position PO bewegt.

Wird bei nicht ganz geschlossener Position PO der Handgriff 2 in Verriegelungs-Richtung gedrückt, so kann der Ausnahmefall auftreten, daß eine Verriegelung nicht möglich ist. Dieser Ausnahmefall ist z.B. dann gegeben, wenn auf dem Verriegelungshaken-Verschlußteil unerwünscht ein Kleidungsstück liegt, welches eine Verriegelung verhindert. Hierbei würde das Ende 9-1* der Feder 9* bei Schwenkung des Verriegelungshakens an die Innenwandung 2-2 des Handgriffes gedrückt (FIG.3) werden. Je mehr Handgriff und Verriegelungshaken aufeinander zu bewegt werden, um so höher wird die dabei entgegenwirkende Federkraft.
Der Handgriff wird dadurch "abgefedert", wenn eine nicht mögliche Verriegelung erzwungen werden soll. Aus diese Weise wird die Gefahr von Beschädigungen der Verriegelungsanordnung oder des störenden Bekleidungsstücks vermieden oder verringert.

In der Ausführungsform gemäß FIG. 2A und 2B ist die Dämpfungs-Feder 9, 9* U-förmig ausgeführt, wobei ihre Befestigungsenden gegeneinander versetzt an den Seiten des Verriegelungshakens 3,3* in entsprechenden Bohrlöchern fixiert sind.

FIG.3 zeigt
eine auszugsweise schematische perspektivische Darstellung der Rückseite des Rahmenteiles 1 und des Handgriffes 2 in geschlossener Position des Handgriffes mit Blick auf den Verschlußhaken 3*. Die Bezugszeichen für die entsprechenden Teile sind die gleichen wie in FIG. 2A und 2B. FIG. 3 dient einer detaillierteren Darstellung der Feder 9*, wenn deren Basis-Ende 9-1* an die Innenwandung 2-2 des Haltegriffes gedrückt wird (gestrichelter Berührungsbereich) und bei zunehmenden Druck federnd (unter "sanfter Steigerung der Federkraft) in Richtung T ausweicht.
Sollte bei diesem Vorgang keine Verriegelung erfolgen können, so wird dadurch die Gefahr der Beschädigung der am Schließvorgang beteiligten Teile verhindert oder zumindestens herabgemindert.

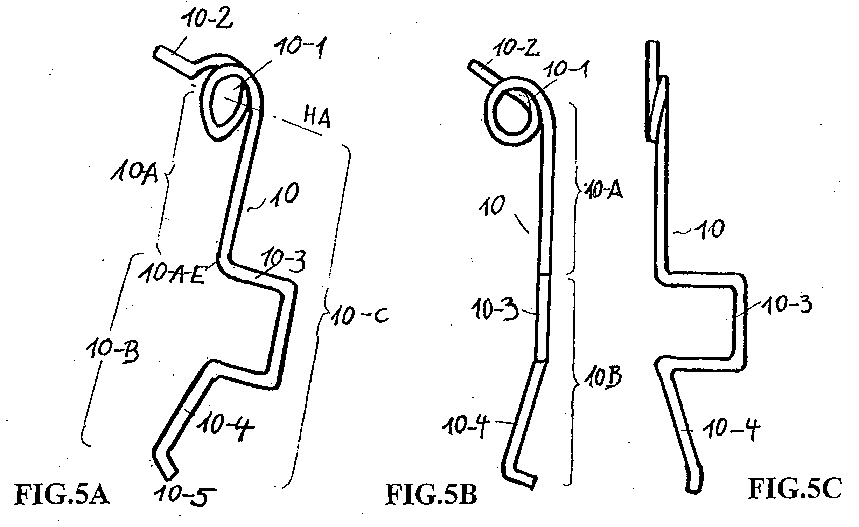

Die Fig.5 A-5C zeigen
eine Kombinationsfeder 10 in verschiedenen Ansichten.
Diese Kombinations-Feder 10 vereint in sich die Funktion der Schwenkarm-Feder (nicht dargestellt) und die Funktion der Dämpfungs-Feder 9, 9*.
Die Kombinationsfeder 10 weist u.a. einen zwei Abschnitte (10-A, 10-B) umfassenden Federarm (10 C) auf.
Ihre Windung 10-1 müßte auf der Handgriff-Achse HA bzw. HA' angeordnet werden, wobei sie sich mit dem Teil 10-2 am Rahmenteil abstützt. Das Ende 10-A-E ihres achsnahen Abschnitts 10-A müßte am Schwenkarm anliegen und diesen zur Erreichung der geschlossenen Position des Handgriffes vorspannen.
Der achsferne Abschnitt 10 B weist eine am Verriegelungshaken anliegende mäanderartige Sektion 10-3 und ein freies Armende 10-4 ( vergleichbar in seiner Funktion mit der der Dämpfungs-Feder 9) auf, welches den schwenkbaren Verriegelungshaken gegen die Innenwandung des Handgriffes 2 zunehmend abfedert, wenn sich Verriegelungshaken und die Innenwandung des Handgriffes einander nähern.
Bei Verwendung einer solchen Kombinationsfeder 10 können die Bohrungen im Verriegelungshaken zur Aufnahme der Enden für die Dämpfungs-Feder 9 entfallen.

Die kompakte Konstruktion des erfindungsgemäßen Verriegelungsanordnung gestattet es, am Rahmenteil 1 zwei unabhängig voneinander wirkende Verriegelungshaken 3, 3* vorzusehen.
Dadurch ist die Möglichkeit einer sogenannten Doppel-Verriegelung gegeben. Sollte sich nur einer der beiden Verriegelungshaken verriegeln lassen ( während der andere wegen eines angenommenen Defektes oder wegen eines den Verriegelungsvorgang störenden Kleidungsstückes nicht verriegelt werden kann ), so bleibt dennoch eine einfache (nicht doppelte) Verriegelung gewährleistet.

## Patentansprüche

1. Lösbare mechanische Verriegelungsanordnung zwischen einem schwenkbaren Deckel und einem Behälter, vorzugsweise einem Gepäckfach,
welche ein mit dem Deckel verbindbares an sich bekanntes Rahmenteil (1) und einen an sich bekannten in diesem Rahmenteil (1) angeordneten schwenkbaren Handgriff (2) umfaßt,
wobei der Schwenkbereich des Handgriffes (2) zwischen einer geschlossenen und einer geöffneten Position (PO) liegt und wobei die Verriegelungsanordnung mindestens einen am Rahmenteil (1) angeordneten Verriegelungshaken (3) sowie ein mit dem Behälter verbindbares Verriegelungshaken-Verschlußteil aufweist,
welches von dem Verriegelungshaken (3) verriegelnd umfaßbar ist,
wobei der Handgriff (2) mindestens einen Schwenkarm (6) aufweist, mit dem er (2) um eine im Rahmenteil (1) angeordnete Handgriff-Schwenk-Achse (HA) schwenkbar ist,
wobei der Verriegelungshaken (3) ebenfalls um diese Handgriff-Schwenk-Achse (HA) schwenkbar ist,
wobei der Schwenkarm (6) durch eine Schwenkarm-Feder vorgespannt ist zur Erreichung der geschlossenen Position des Handgriffes,
wobei der Schwenkarm (6) einen Mitnehmer (5) für den Verriegelungshaken (3) aufweist,
durch welchen Mitnehmer (5) bei Öffnung des Handgriffes (2) zur Lösung der Verriegelung der Verriegelungshaken (3) mitnehmbar ist,
wobei der Verriegelungshaken (3) im unverriegelten Zustand in Öffnungsrichtung (A) des Handgriffes (2) schwenkbar ist, bis ein mit ihm zusammenwirkendes Element an der Innenseite (2-2) des Handgriffes ( 2) anschlägt und wobei bei weiterer Schwenkung des Verriegelungshakens der Handgriff (2) aus der geschlossenen in die geöffnete Position (PO) bewegbar ist,
**dadurch gekennzeichnet,**
**daß** das Element eine am Verriegelungshaken (3) befestigte Dämpfungs-Feder (9) oder eine mit dem Verriegelungshaken zusammenwirkende,in sich die Funktion der Schwenkarm-Feder und der Dämpfungs-Feder vereinende, Kombinations-Feder (10) ist,
die den Schwenkarm (6) zur Erreichung der geschlossenen Position des Handgriffes vorspannt, und
den schwenkbaren Verriegelungshaken (3) gegen die Innenwandung des Handgriffes (2) zunehmend abfedert, wenn sich Verriegelungshaken (3) und die Innenwandung des Handgriffes (2) einander nähern.

2. Anordnung nach Anspruch 1,
**dadurch gekennzeichnet, daß**
die Dämpfungs-(9) oder Kombinations-Feder (10) eine auf den Handgriff (2) wirkende Druckfeder ist.

3. Anordnung nach Anspruch 1 oder Anspruch 2,
**dadurch gekennzeichnet,**
**daß** die Kombinations-Feder (10) einen von der Handgriff-Schwenkachse (HA) ausgehenden zwei Abschnitte (10-A, 10-B) umfassenden Federarm (10-C) aufweist,
wobei das Ende (10-A-E) des achsnahen Abschnitts (10 A) am Schwenkarm (6) anliegt und diesen zur Erreichung der geschlossenen Position des Handgriffes (2) vorspannt, und
wobei der achsferne Abschnitt (10 B) eine am Verriegelungshaken anliegende Sektion (10-3) und ein freies Armende (10-4) aufweist, welches den schwenkbaren Verriegelungshaken (3) gegen die Innenwandung des Handgriffes (2) zunehmend abfedert, wenn sich Verriegelungshaken (3) und die Innenwandung des Handgriffes (2) einander nähern.

4. Anordnung nach Anspruch 1,
**dadurch gekennzeichnet,**
**daß** bei geschlossenem Handgriff (2) dessen Frontfläche (F) in der durchgehend gedachten Frontfläche (F') des Rahmenteils (1) liegt und
**daß** sich bei geöffneter Position (PO) des Handgriffes (2) dessen Frontfläche (F) mit der durchgehend gedachten Frontfläche (F') des Rahmenteils schneidet.

5. Anordnung nach Anspruch 4,
**dadurch gekennzeichnet, daß**
der Handgriff (2) mindestens eine für die visuelle Wahrnehmung markierte Seitenfläche (S) aufweist, welche bei geöffneter Position (PO) des Handgriffes aus der durchgehend gedachten Frontfläche (F') des Rahmenteils heraussteht.

6. Anordnung nach einem der Ansprüche 1 bis 5,
**dadurch gekennzeichnet,**
**daß** die Verriegelungsanordnung zwei unabhängig voneinander wirkende Verriegelungshaken (3,3*) aufweist.

## Claims

1. Detachable mechanical locking arrangement between a swivelling cover and a container, preferably a luggage compartment,
which comprises a frame section (1) known in the art which can be joined to the cover, and a hinged handle (2) known in the art located in this frame section (1),
where the swivelling area of the handle (2) lies between a closed and an open position (PO) and where the locking arrangement has at least one locking hook (3) located on the frame section (1) and a closing part for the locking hook which can be joined to the container,
which can be embraced by the locking hook (3) to close the lock,
where the handle (2) has at least one swivelling arm (6) which allows it (2) to swivel around a handle-swivelling axis (HA) located in the frame section (1),
where the locking hook (3) also swivels around this handle-swivelling axis (HA),
where the swivel arm (6) is tensioned by a swivel-arm spring in order to achieve the closed position of the handle,
where the swivel arm (6) has a tappet (5) for the locking hook (3),
by means of which tappet (5) the locking hook (3) is entrained when the handle (2) is opened, thereby releasing the lock,
where, in the unlocked state, the locking hook (3) can be swivelled in the opening direction (A) of the handle (2), until an element co-operating with it contacts the inside (2-2) of the handle (2) and where, when the locking hook swivels further, the handle (2) can be moved from the closed to the open position (PO),
**characterised in that**
the element is a damping spring (9) attached to the locking hook (3), or a combination spring (10) which co-operates with the locking hook and combines the function of the swivel-arm spring and the damping spring, which tensions the swivel arm (6) to achieve the closed position of the handle, and
increasingly cushions the swivelling locking hook (3) against the interior wall of the handle (2) when the locking hook (3) and the interior wall of the handle (2) approach one another.

2. Arrangement according to claim 1,
**characterised in that**
the damping spring (9) or combination spring (10) is a pressure spring acting on the handle (2).

3. Arrangement according to claim 1 or claim 2,
**characterised in that**
the combination spring (10) has a spring arm (10-C) consisting of two sections (10-A, 10-B) which issues from the swivelling axis (HA) of the handle,
where the end (10-A-E) of the section (10-A) adjacent to the axis (10-A) lies against the swivelling arm (6) and tensions this in order to achieve the closed position of the handle (2) , and where the section (10-B) furthest away from the swivelling axis has a section (10-3) lying against the locking hook and a free arm end (10-4) which increasingly cushions the swivelling locking hook (3) against the inner wall of the handle (2) when the locking hook (3) and the inner wall of the handle (2) approach one another.

4. Arrangement according to claim 1,
**characterised in that**
when the handle (2) is closed, its front surface (F) lies in the imaginary continuation of the front surface (F') of the frame section (1), and that
in the open position (PO) of the handle (2), its front surface (F) intersects the imaginary continuation of the front surface (F') of the frame section.

5. Arrangement according to claim 4,
**characterised in that**
the handle (2) has a side surface (S) marked for visual recognition, which, when the handle is in the open position (PO), projects from the imaginary continuation of the front surface (F) of the frame section.

6. Arrangement according to one of the claims 1 to 5,
**characterised in that**
the locking arrangement has two locking hooks (3,3*) acting independently of one another.

## Revendications

1. Dispositif de verrouillage mécanique pouvant être défait entre un couvercle pivotant et un récipient, de préférence une boîte d'emballage,
qui comprend une partie formant cadre (1) connue en soi et pouvant être assemblée avec le couvercle et une poignée (2) pivotante connue en soi et disposée dans cette partie formant cadre (1),
dans lequel la partie pivotante de la poignée (2) se trouve entre une position fermée et une position ouverte (PO) et le dispositif de verrouillage présente au moins au moins un crochet de verrouillage (3) disposé sur la partie formant cadre (1) ainsi qu'une partie de fermeture à crochet de verrouillage pouvant être assemblée avec le récipient,
qui peut être entourée par le crochet de verrouillage (3) de façon à réaliser le verrouillage,
dans lequel la poignée (2) présente au moins un bras pivotant (6) permettant de la (2) faire pivoter autour d'un axe de pivotement de la poignée (HA) disposé dans la partie formant cadre (1), le crochet de verrouillage (3) pouvant également pivoter autour de cet axe de pivotement de la poignée (HA),
dans lequel le bras pivotant (6) est précontraint par un ressort de bras pivotant vers la position fermée de la poignée,
dans lequel le bras pivotant (6) présente un organe d'entraînement (5) pour le crochet de verrouillage 3,
lequel organe d'entraînement (5) peut entraîner le crochet de verrouillage (3) lors de l'ouverture de la poignée (2) pour défaire le verrouillage,
dans lequel le crochet de verrouillage (3) dans l'état non verrouillé peut pivoter dans le sens d'ouverture (A) de la poignée (2) jusqu'à ce qu'un élément coopérant avec lui bute sur la face intérieure (2-2) de la poignée (2), et dans lequel la poignée (2) peut être déplacée de la position fermée à la position ouverte (PO) lorsque le basculement du crochet de verrouillage se poursuit,
**caractérisé en ce que** l'élément est un ressort d'amortissement (9) fixé au crochet de verrouillage (3) ou un ressort combiné (10) coopérant avec le crochet de verrouillage et réunissant la fonction du ressort de bras pivotant et de ressort d'amortissement,
qui précontraint le bras pivotant (6) vers la position fermée de la poignée et amortit de plus en plus le crochet de verrouillage pivotant (3) contre la paroi intérieure de la poignée (2) lorsque le crochet de verrouillage (3) et la paroi intérieure de la poignée (2) se rapprochent l'un de l'autre.

2. Dispositif selon la revendication 1, **caractérisé en ce que** le ressort d'amortissement (9) ou combiné (10) est un ressort de compression agissant sur la poignée (2).

3. Dispositif selon la revendication 1 ou 2, **caractérisé en ce que** le ressort combiné (10) présente un bras de ressort (10-C) partant de l'axe de pivotement de la poignée (HA) et comprenant deux parties (10-A, 10-B),
l'extrémité (10-A-E) de la partie proche de l'axe (10-A) reposant sur le bras des pivotement (6) et précontraignant celui-ci vers la position fermée de la poignée (2), et la partie distante de l'axe (10-B) présentant une section (10-3) reposant sur le crochet de verrouillage et une extrémité de bras libre (10-4), qui amortit de plus en plus le crochet de verrouillage pivotant (3) contre la paroi intérieure de la poignée (2) lorsque le crochet de verrouillage (3) et la paroi intérieure de la poignée (2) se rapprochent l'un de l'autre.

4. Dispositif selon la revendication 1, **caractérisé en ce que** lorsque la poignée (2) est fermée, sa face frontale (F) se trouve dans la face frontale continue imaginaire (F') de la partie formant cadre (1) et
**en ce que** lorsque la poignée (2) se trouve dans la position ouverte (PO), sa face frontale (F) coupe la face frontale continue imaginaire (F') de la partie formant cadre.

5. Dispositif selon la revendication 4, **caractérisé en ce que** la poignée (2) présente au moins une surface latérale (S) marquée en vue d'une perception visuelle, qui dépasse de la face frontale continue imaginaire (F') de la partie formant cadre lorsque la poignée se trouve dans la position ouverte (PO).

6. Dispositif selon l'une quelconque des revendications 1 à 5, **caractérisé en ce que** le dispositif de verrouillage présente deux crochets de verrouillage (3, 3*) agissant indépendamment l'un de l'autre.
